# EUROPÄISCHE PATENTSCHRIFT

(11) **EP 2 142 386 B1**
(45) Veröffentlichungstag und Bekanntmachung des Hinweises auf die Patenterteilung: **12.10.2011**
(21) Anmeldenummer: 07764411.0
(22) Anmeldetag: 28.06.2007
(51) Int. Cl.: B60B 27/00, F16C 19/18, F16C 33/30, F16C 35/063, F16C 43/04

(54) **LAGERANORDNUNG EINER ÜBER EIN DREHGELENK ANTREIBBAREN RADNABE EINES KRAFTFAHRZEUGES**
BEARING ARRANGEMENT FOR A MOTOR VEHICLE WITH A WHEEL HUB DRIVABLE BY A ROTATING JOINT
AGENCEMENT DE PALIER D'UN MOYEU DE ROUE DE VÉHICULE AUTOMOBILE POUVANT ÊTRE ENTRAÎNÉ PAR UNE ARTICULATION TOURNANTE

(30) Priorität: 01.07.2006 DE 102006030478
(43) Veröffentlichungstag der Anmeldung: 13.01.2010
(73) Patentinhaber: Schaeffler Technologies GmbH & Co. KG, 91074 Herzogenaurach (DE)
(72) Erfinder: LANGER, Roland, 97523 Schwanfeld (DE); NIEBLING, Peter, 97688 Bad Kissingen (DE); MASUR, Ernst, 97508 Untereuerheim (DE)
(86) Internationale Anmeldenummer: PCT/DE2007/001158
(87) Internationale Veröffentlichungsnummer: WO 2008/003292

(56) Entgegenhaltungen:
- DE-A1- 3 636 243
- JP-A- 8 200 384

## Beschreibung

### Gebiet der Erfindung

Die Erfindung bezieht sich auf eine Lageranordnung einer über ein Drehgelenk antreibbaren Radnabe eines Kraftfahrzeuges, bei der die mit einem Radflansch verbundene Radnabe und das mit einer Antriebswelle verbundene Drehgelenk mittels einer Verzahnung drehfest miteinander verbunden sind, und mit einem auf der Radnabe aufgezogenen zweireihigen Wälzlager mit zumindest einem separaten Lagerinnenring, der mit einer Stirnfläche axial über das Ende eines Achsstumpfs der Radnabe hinausragt, wobei das Wälzlager über eine auf die Stirnfläche des separaten Lagerinnenringes einwirkende Gegenfläche eines Gelenkkörpers des Drehgelenks axial vorgespannt ist, wobei eine Stirnfläche des Achsstumpfes der Radnabe eine Stirnverzahnung aufweist, welche mit einer korrespondierenden Stirnverzahnung des gelenkkörpers des Drehgelenks drehfest verbindbar ist und wobei die Stirnverzahnungen teilweise radial und axial unterhalb des Wälzlagers angeordnet sind.

Eine derartige Anordrung ist aus der JP 08 200384 bekannt. Das Dreh-Gelenk wird mittels eines Bolzens gegen den Achsstumpf der Radnabe und den Innenring gespannt. Diese Elemente müssen somit mit großer Genauigkeit hergestellt werden.

Eine andere Lageranordnung einer über ein Drehgelenk antreibbaren Radnabe eines Kraftfahrzeuges ist aus der DE 42 10 461 C2 bekannt. Bei dieser Anordnung wird die drehfeste Verbindung von Radnabe und Drehgelenk durch einen Gewindezapfen ermöglicht, welcher eine Wellenverzahnung aufweist, die in eine entsprechend ausgestaltete axiale Innenverzahnung im Achsstumpf der Radnabe eingreift. Die Gegenfläche des Gelenkkörpers der Gelenkwelle wirkt gleich zweifach auf den über den Achsstumpf der Radnabe überstehenden Lagerinnenring ein, nämlich dadurch, dass eine Stirnseite der Gegenfläche auf eine Stirnseite des axial überstehenden Lagerinnenringes presst und dadurch, dass eine Axialfläche der Gegenfläche den überstehenden Teil des Lagerinnenrings stützt. Ziel dieser Anordnung ist die Verhinderung von Verformungseffekten, insbesondere von solchen Verformungseffekten, welche infolge von Biegemomenten auf den Lagerinnenring einwirken.

Vorteilhaft an einer derartigen Anordnung ist ein relativ kompakter und kurz bauender Aufbau der Radnaben-Drehgelenk-Einheit, da der Gelenkkörper zumindest ein Stück weit axial in der Radnabe aufgenommen ist. Daher findet eine zunehmend erwünschte Verschiebung des Gelenkwellenmittelpunktes vom äußeren Kugelgelenk möglichst weit in Richtung Fahrzeugaußenseite statt. Als nachteilig muss aber die Ausgestaltung der Verzahnung als Wellenverzahnung angesehen werden, da mit einer derartigen, sich im Wesentlichen axial erstreckenden Verzahnung die Einstellung des korrekten Abstandes der Bauteile zueinander problematisch erscheint. Ferner macht die auf die Stirnseite des Lagerinnenringes einwirkende Gegenfläche des Gelenkkörpers eine genaue Einstellung der nötigen Vorspannung des Lagerinnenrings schwierig, da sich beim Verspannen der Radlagereinheit mit der Gelenkwelle das Problem der Überbestimmung für die gewünschte axiale Spielfreiheit von Verzahnung und Radlagerluft durch zwei axiale bzw. radiale Anlagestellen im Bereich der Gelenkwellenanlage am Lagerinnenring ergibt. Es sind andere Lageranordnungen einer über ein Drehgelenk antreibbaren Radnabe eines Kraftfahrzeuges bekannt, welche diese Probleme nicht aufweisen, dafür aber in anderer Hinsicht verbesserungsfähig sind.

Aus der DE 31 16 720 C1 ist eine Lageranordnung bekannt, bei welcher der gesamte Innenring einstückig an der Radnabe ausgebildet ist, so dass dort das Einstellen der Vorspannung und das Fixieren eines separaten Lagerinnenrings keine Rolle spielen. In die zum Gelenkkörper gerichtete Stirnseite des Achsstumpfs der Radnabe ist eine Stirnverzahnung eingeformt, welche mit einer Stirnverzahnung im Gelenkaußenteil des Gelenkkörpers korrespondiert, so dass hierdurch eine einfache, lösbare Befestigung dieser Bauteile gewährleistet ist. Für Lageranordnungen mit mehrteiligen Innenringen eignet sich eine derartige Anordnung nicht. Zwar soll sich durch diese Ausgestaltung eine geringe axiale Baulänge erreichen lassen, jedoch ist diese für immer kompakter werdende Fahrzeuge bei zunehmend geringerem zur Verfügung stehendem Bauraum für heutige Anforderungen immer noch zu groß.

Eine ähnliche Anordnung ist aus der DE 36 04 630 C2 bekannt, bei welcher die axial endständigen Stirnverzahnungen von Radnabe und Drehgelenk taumelgepresst sind. Auch diese Anordnung nimmt relativ viel axialen Bauraum ein.

Aus der DE 36 36 243 C2 ist eine Radlager-Gleichlaufgelenk-Einheit mit einem zweireihigen Lager bekannt, das zumindest einen von der Radnabe getrennt ausgebildeten Lagerinnenring aufweist, der durch einen an der Radnabe ausgebildeten umgeformten Bund axial gehalten oder verspannt ist. Der Bund kann dabei unmittelbar oder mittelbar über ein Zwischenteil zur Halterung des Lagerinnenringes vorgesehen sein. Als Umformungsverfahren kommt insbesondere eine Kaltumformung in Betracht. Bei einer Ausführungsform ist dort vorgesehen, dass eine Stirn- oder Schrägverzahnung in den den Lagerinnenring radial nach außen übergreifenden, umgeformten Bund der Radnabe eingeformt ist, wobei die Stirn- oder Schrägverzahnung mit einem Gelenkbauteil, insbesondere dem Gelenkaußenteil, unmittelbar drehfest verbindbar ist. Durch eine derartige Ausgestaltung soll es möglich sein, eine großflächige, radial orientierte Stirnverzahnung oder leicht konische Schrägverzahnung unabhängig von der Art der Lagergestaltung darzustellen, wobei nach einem entsprechenden Verfahren die Schräg- oder Stirnverzahnung zugleich beim Herstellen des Bundes in das Material eingeprägt wird.

Eine andere Ausgestaltung sieht bei der DE 36 36 243 C2 vor, dass eine Schräg- oder Stirnverzahnung an einem den Lagerinnenring radial nach außen vergrößernden Ringansatz ausgebildet ist, wobei die Stirn- oder Schrägverzahnung mit einem Gelenkbauteil, insbesondere dem Gelenkaußenteil, unmittelbar drehfest verbindbar ist, und bei welcher der Lagerinnenring Eingriffsmittel aufweist, in die der umgeformte Bund formschlüssig eingreift. Hiernach nimmt der separate Lagerinnenring, der mit einer vergrößerten Stirnfläche versehen sein kann, an der Drehmomentübertragung von der Nabe auf das Drehgelenk teil.

Bei dieser Lösung wird auf einen Wälznietbund durch Materialumformung eine Axialverzahnung aufgebracht. Durch diesen Wälznietbund mit Verzahnung wird in axialer Richtung zusätzlicher Bauraum benötigt. Dies bewirkt eine Beugewinkelvergrößerung der Gelenkwelle und hat somit einen negativen Einfluss auf die Gelenkwellenlebensdauer und den Lenkeinschlag des Fahrzeuges.

Aus der US 6,146,022 ist schließlich eine Lageranordnung einer über ein Drehgelenk antreibbaren Radnabe eines Kraftfahrzeuges bekannt, welche im Hinblick auf eine geringe Baulänge an sich sehr vorteilhaft ist. Der Achsstumpf der Radnabe und eine Stirnseite des Gelenkkörpers weisen zueinander korrespondierende Stirnverzahnungen auf, wobei die Stirnverzahnungen etwa mittig unterhalb der Laufbahnen der Lageranordnung angeordnet sind. Hierbei sind eine innere Laufbahn in der Radnabe und die andere innere Laufbahn im Mantel des Gelenkkörpers eingeformt. Durch die Integration der Wälzkörperlaufbahn in den Gelenkkörper wird der axial benötigte Bauraum reduziert. Der Mittelpunkt des Gelenkkörpers wandert daher weiter in Richtung Fahrzeugaußenseite. Allerdings ist bei einer derartigen Anordnung die Einstellung der notwendigen Vorspannung der Wälzkörper der Lageranordnung schwierig.

### Aufgabe der Erfindung

Der Erfindung liegt die Aufgabe zugrunde, eine Lageranordnung zu schaffen, welche die geschilderten Nachteile beseitigt. Insbesondere ist es Aufgabe der Erfindung, eine axial kurz bauende Einheit aus Radnabe, Lageranordnung und Drehgelenk zu schaffen, bei welcher die Einstellung der Vorspannung des Lagers einfach zu bewerkstelligen ist.

### Zusammenfassung der Erfindung

Der Erfindung liegt die Erkenntnis zugrunde, dass sich die gestellte Aufgabe auf überraschend einfache Art und Weise dadurch lösen lässt, dass der Lagerinnenring mit einem Mittel zum axialen Toleranzausgleich zwischen dem Lagerinnenring und der Stützfläche des Gelenkkörpers in Verbindung steht.

Die Erfindung geht daher aus von einer Lageranordnung einer über ein Drehgelenk antreibbaren Radnabe eines Kraftfahrzeuges, bei der die mit einem Radflansch verbundene Radnabe und das mit einer Antriebswelle verbundene Drehgelenk mittels einer Verzahnung drehfest miteinander verbunden sind, und mit einem auf der Radnabe angeordneten zweireihigen Wälzlager mit zumindest einem separaten Lagerinnenring, der mit einer Stirnfläche axial über das Ende eines Achsstumpfes der Radnabe hinausragt, wobei das Wälzlager über eine auf die Stirnfläche des separaten Lagerinnenringes einwirkende Gegenfläche eines Gelenkkörpers des Drehgelenks axial vorgespannt ist. Zudem ist vorgesehen, dass eine Stirnfläche des Achsstumpfes der Radnabe eine Stirnverzahnung aufweist, welche mit einer korrespondierenden Stirnverzahnung des Gelenkkörpers des Drehgelenks drehfest verbindbar ist, wobei die Stirnverzahnungen zumindest teilweise radial und axial unterhalb des Wälzlagers angeordnet sind, und dass der Lagerinnenring mit einem Mittel zum axialen Toleranzausgleich zwischen dem Lagerinnenring und der Gegenfläche des Gelenkkörpers in Verbindung steht.

Durch diesen Aufbau wird vorteilhaft erreicht, dass die vorgesehene Verbindungsstelle der Axialverzahnung bzw. der Stirnverzahnungen möglichst weit unter die Kugellaufbahnen angeordnet ist, wodurch sich eine axial kurz bauende Einheit aus Radnabe und Drehgelenk ergibt.

Das sich beim Verspannen der Radlagereinheit mit der Gelenkwelle ergebende Problem der Überbestimmung für die gewünschte axiale Spielfreiheit von Verzahnung und Radlagerluft durch zwei axiale Anlagestellen im Bereich der Verzahnung und der Gelenkwellenanlage am Lagerinnenring wird durch das Mittel zum axialen Toleranzausgleich zwischen dem Lagerinnenring und der Stützfläche des Gelenkkörpers gelöst. Hierbei können diese Mittel durch eine entsprechende Gestaltung der betroffenen Teile, nämlich von Lagerinnenring und/oder Anlagefläche des Gelenkkörpers oder durch entsprechende elastisch / plastisch verformbare Zwischenteile dargestellt werden.

Es wird also auf überraschend einfache Art und Weise eine Lageranordnung aus zum Teil für sich bekannten Einzelkomponenten geschaffen, die nicht nur schmal bzw. axial kurz baut, bei der zudem in völlig neuartiger Weise eine einfache und exakte Einstellung der Lagervorspannung ermöglicht ist.

In Weiterbildungen der Erfindung kann das Mittel zur Toleranzeinstellung auf unterschiedlichste Weise ausgestaltet sein, so dass sich eine Reihe neuartiger Gestaltungsmöglichkeiten im Bereich der Konstruktion von Radnaben-Gelenkwellen-Verbindungen ergeben.

Insbesondere kann vorgesehen sein, dass das Mittel zum axialen Toleranzausgleich zwischen dem Lagerinnenring und der Gegenfläche des Gelenkkörpers als ein axialer Freistich in Form einer Ringnut in einer Stirnseite des Gelenkkörpers ausgebildet ist.

In anderen praktischen Weiterbildungen kann vorgesehen sein, dass das Mittel zum axialen Toleranzausgleich ein Federelement ist, welches zwischen der Gegenfläche des Gelenkkörpers und einer Stirnfläche des Lagerinnenrings angeordnet ist.

Diese Ausgestaltung lässt sich noch dadurch ergänzen, dass das Federelement als eine Wellenscheibe, eine Omega-Buchse oder eine Tellerfeder ausgebildet ist.

Besonders vorteilhaft ist ebenso eine Weiterbildung der Erfindung, die sich dadurch auszeichnet, dass das Mittel zum axialen Toleranzausgleich durch einen anderen Freistich gebildet ist, wobei dieser Freistich derart in den Achsstumpf eingeformt ist, dass zwischen einem axial inneren Lagerinnenring und einer axial inneren Stirnfläche des axial äußeren Lagerinnenringes ein axialer Abstand verbleibt.

Es liegt ebenso im Rahmen der Erfindung vorzusehen, dass das Mittel zum axialen Toleranzausgleich durch eine Querschnittsverjüngung des axial äußeren Lagerinnenrings im Bereich seiner axial inneren Stirnfläche gebildet ist.

Besonders vorteilhaft ist schließlich eine Ausgestaltung der Erfindung, die sich dadurch auszeichnet, dass die Stirnverzahnung als eine Hirth-Verzahnung mit radial verlaufenden Zähnen mit einer Anzahl von 20 bis 80, insbesondere 25 bis 50, ausgebildet ist.

### Kurze Beschreibung der Zeichnungen

Die Erfindung wird im Folgenden anhand der beiliegenden Zeichnung näher erläutert. Darin zeigt
- Fig. 1: einen Längsschnitt durch ein erstes Ausführungsbeispiel einer Lageranordnung gemäß der Erfindung,
- Fig. 2: einen Längsschnitt durch ein zweites Ausführungsbeispiel einer Lageranordnung gemäß der Erfindung,
- Fig. 3: einen Längsschnitt durch ein drittes Ausführungsbeispiel einer Lageranordnung gemäß der Erfindung,
- Fig. 4: einen Längsschnitt durch ein viertes Ausführungsbeispiel einer Lageranordnung gemäß der Erfindung; und
- Fig. 5: einen Längsschnitt durch ein fünftes Ausführungsbeispiel einer Lageranordnung gemäß der Erfindung.

### Detaillierte Beschreibung der Zeichnung

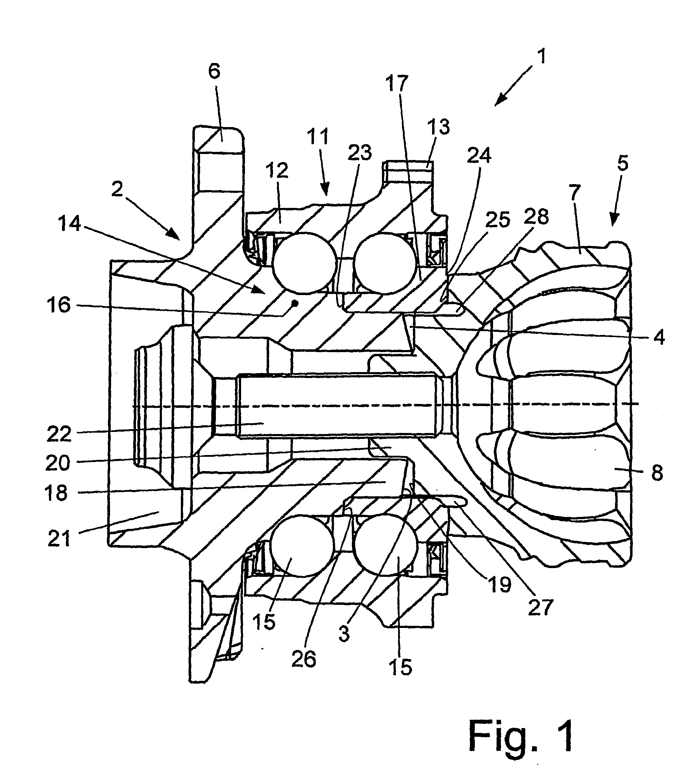

In den Figuren 1 bis 5 ist jeweils eine Lageranordnung 1 im Längsschnitt dargestellt, wobei für gleiche Bauteile nachfolgend die selben Bezugsziffern verwendet werden.

Fig. 1 zeigt demnach ein erstes Ausführungsbeispiel einer Lageranordnung 1, die eine Radnabe 2 eines nicht dargestellten Kraftfahrzeuges aufweist. Die Radnabe 2 ist über eine Stirnverzahnung 3, 4 mit einem an sich bekannten Gelenk 5 verbunden. Die Radnabe 2 weist zudem an einem axialen Ende einen Radflansch 6 zur Aufnahme eines nicht dargestellten Fahrzeugrades auf.

Das Gelenk 5 weist in an sich bekannter Weise einen glockenförmigen äußeren Gelenkkörper 7 auf, in dessen Innenseite Laufbahnen 8 für hier mit dargestellten Gelenkkugeln ausgebildet sind. In den äußeren Gelenkkörper 7 ist ein ebenfalls mit Kugellaufbahnen versehendes Gelenkinnenteil einsetzbar, welches mit einer Antriebswelle verbunden ist.

Auf der Radnabe 2 ist ein zweireihiges Wälzlager 11 in Form eines Schrägkugellagers in O-Anordnung angeordnet. Das Wälzlager 11 weist einen Außenring 12, an den ein Befestigungsflansch 13 für eine Bremsscheibe angeformt ist, sowie einen Innenring 14 zur Aufnahme von Wälzkörpern auf. Zwischen Außenring 12 und Innenring 14 sind als Wälzkörper dienende Lagerkugeln 15 angeordnet. Der Innenring 14 besteht aus zwei Lagerinnenringen 16 und 17, wobei ein axial äußerer Lagerinnenring 16 einstückig an der Radnabe 2 ausgebildet ist, während ein axial innerer Lagerinnenring 17 ein separates Bauteil ist, welches auf einen Achsstumpf 18 der Radnabe 2 aufgeschoben ist.

An einer axial äußeren Stirnfläche 19 des äußeren Gelenkkörpers 7 ist eine Stirnverzahnung 4 vorgesehen, die mit der entsprechenden Stirnverzahnung 3 des Achsstumpfes 18 in Eingriff steht. Diese Stirnverzahnung 3, 4 dient zur Übertragung eines Drehmomentes vom Drehgelenk 5 auf die Radnabe 2. Die Stirnverzahnung 3, 4 befindet sich radial und axial unterhalb des Wälzlagers 11, und zwar etwa mittig unterhalb des axial inneren Lagerinnenringes 17.

Im Zentrum der Stirnfläche 19 des äußeren Gelenkkörpers 7 ist ein Ansatz 20 ausgebildet, der eine mit einer Axialverzahnung versehene Bohrung aufweist. In diese Bohrung ist ein von einer zentralen Bohrung 21 der Radnabe 2 her zugänglicher Bolzen 22 eingeschraubt. Diese zentrale Bohrung 21 ist durch eine nicht dargestellte Mittelbohrung des Fahrzeugrades zugänglich, so dass ein Lösen bzw. Montieren der nicht dargestellten Antriebswelle mit dem Drehgelenk 5 von der Fahrzeugaußenseite her möglich ist.

Der axial innere Lagerinnenring 17 weist eine axial äußere Stirnfläche 23 und eine axial innere Stirnfläche 24 auf, welche zu einer Gegenfläche 25 des Gelenkkörpers 7 gerichtet ist und an dieser anliegt. Beim Anziehen des Bolzens 22 werden die Radnabe 2 und der Gelenkkörper 7 axial gegeneinander bewegt, bis die Stirnverzahnungen 3, 4 in Eingriff miteinander sind. Gleichzeitig drückt die Gegenfläche 25 des Gelenkkörpers 7 gegen die axial innere Stirnfläche 24 des Lagerinnenrings 17 und drückt so den Lagerinnenring 17 gegen eine axiale Anlagefläche 26 des Achsstumpfes 18.

Da sich die Stirnverzahnung 3, 4 axial relativ weit unterhalb des Wälzlagers 11 befindet, ergibt sich beim Verspannen der Radnabe 2 mit dem Drehgelenk 5 das Problem der Überbestimmung für die gewünschte axiale Spielfreiheit von Verzahnung und Radiagerluft durch zwei axiale Anlagestellen im Bereich der Stirnverzahnung 3, 4 und der Anlage der Gegenfläche 25 an der Stirnfläche 24 des Lagerinnenrings 17.

Zur Behebung dieses Problems steht der axial innere Lagerinnenring 17 mit einem Mittel 27 zum axialen Toleranzausgleich zwischen diesem Lagerinnenring 17 und der Gegenfläche 25 des Gelenkkörpers 7 in Verbindung. Dieses Mittel 27 zum axialen Toleranzausgleich ist bei der Ausführungsform gemäß Fig. 1 ein axialer Freistich in Form einer Ringnut 28 in der Gegenfläche 25 beziehungsweise in der Stirnfläche 19 des Gelenkkörpers 7. Durch den Freistich 28 wird eine elastische Verformbarkeit im Bereich der Gegenfläche 25 erreicht, so dass es bei der Montage zuerst im Bereich der Stirnverzahnung 3, 4 zu einer spielfreien Anlage von Achsstumpf 18 am Gelenkkörper 7 kommt. Der erforderliche Toleranzausgleich zur sicheren axialen Verspannung des Lagerinnenrings 17 wird durch die elastische Verformbarkeit des Gelenkkörpers 7 im Bereich der Gelenkkörperanlage sichergestellt.

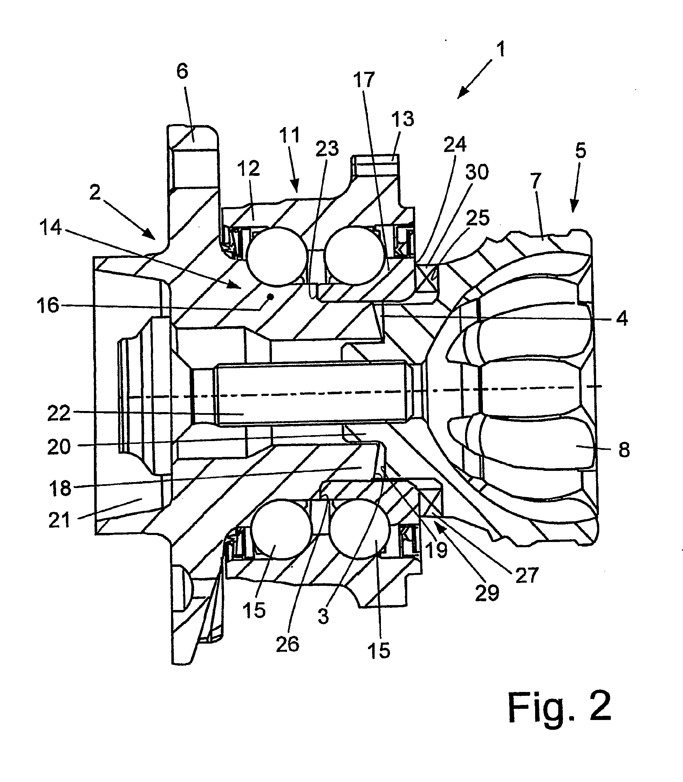

In Fig. 2 ist ein zweites Ausführungsbeispiel der erfindungsgemäßen Lageranordnung 1 dargestellt, die weitgehend der in Fig. 1 dargestellten entspricht. Lediglich das Mittel 27 zum axialen Toleranzausgleich ist hier anders ausgeführt, nämlich als ein Federelement 29 in Form einer Wellenscheibe 30, welche zwischen der Gegenfläche 25 und der Stirnfläche 24 des axial inneren Lagerinnenrings 17 angeordnet ist. Anstelle der Wellenscheibe 30 lässt sich aber auch ein anderes Bauteil aus verformbarem bzw. elastischem Material einsetzen, beispielsweise eine an sich bekannte Omega-Buchse oder eine Tellerfeder.

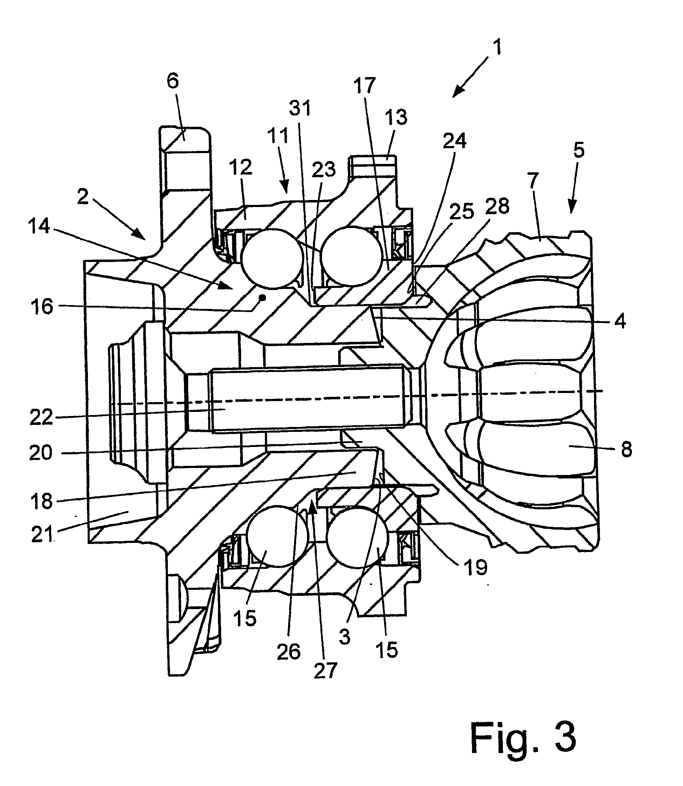

In Fig. 3 ist ein drittes Ausführungsbeispiel der erfindungsgemäßen Lageranordnung 1 dargestellt, die weitgehend der in Fig. 1 dargestellten entspricht. Auch bei dieser Ausführungsform ist ein axialer Freistich in Form einer Ringnut 28 in der Gegenfläche 25 in die Stirnfläche 19 des Gelenkkörpers 7 eingebracht. Das Mittel 27 zum axialen Toleranzausgleich wird bei dieser Ausführungsform zusätzlich zur Ringnut 28 durch einen Freistich 31 gebildet, wobei dieser Freistich 31 derart in den Achsstumpf 18 eingeformt ist, dass zwischen dem axial äußeren Lagerinnenring 16 und der axial äußeren Stirnfläche 23 des inneren Lagerinnenringes 17 ein axialer Abstand verbleibt. Durch den Freistich 31 lässt sich der Lagerinnenring 17 über eine kurze Strecke axial frei verschieben. Das benötigte Axialspiel der Lageranordnung 1 wird durch entsprechende Verpaarung der Einzelteile oder über ein Schleifen der inneren Laufbahnen im zusammengebauten Zustand erreicht.

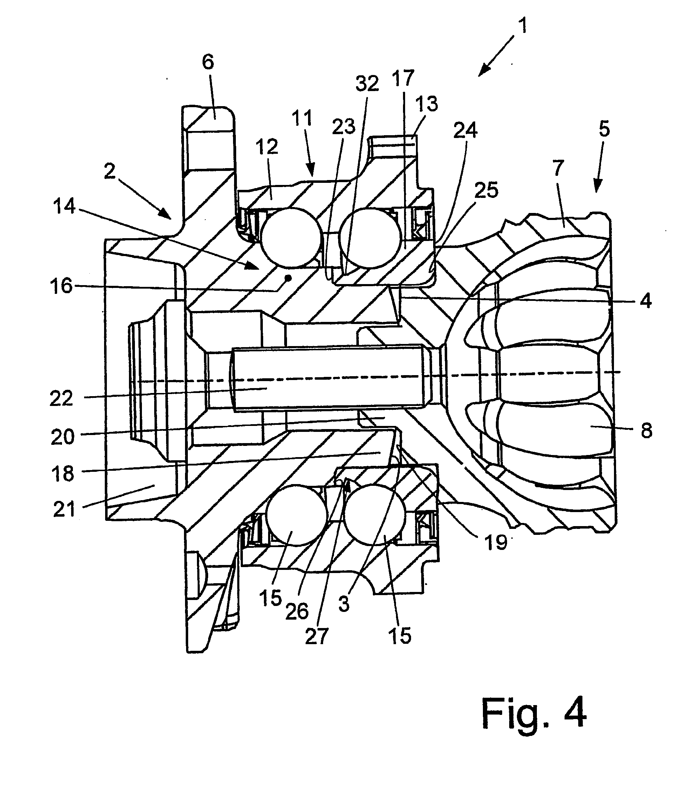

In Fig. 4 ist ein viertes Ausführungsbeispiel der erfindungsgemäßen Lageranordnung 1 dargestellt, die weitgehend den in den Figuren 1 bis 3 dargestellten Ausführungsbeispielen entspricht, jedoch keine Ringnut in der Gegenfläche 25 des Gelenkkörpers 7 aufweist. Das Mittel 27 zum axialen Toleranzausgleich wird bei dieser Ausführungsform durch eine Querschnittsverjüngung 32 des axial inneren Lagerinnenringes 17 im Bereich seiner axial äußeren Stirnfläche 23 gebildet. Die Querschnittsverjüngung 32 des axial inneren Lagerinnenringes 17 ist so gestaltet, dass bei entsprechender Kraftbeaufschlagung durch die Gegenfläche 25 des Gelenkkörpers 7 auf die axial innere Stirnfläche 24 des Lagerinnenringes 17 ein Toleranzausgleich durch die Verformung des Lagerinnenringes 17 gewährleistet ist. Die Querschnittsverjüngung 32 des axial inneren Lagerinnenringes 17 wirkt demnach als Federelement.

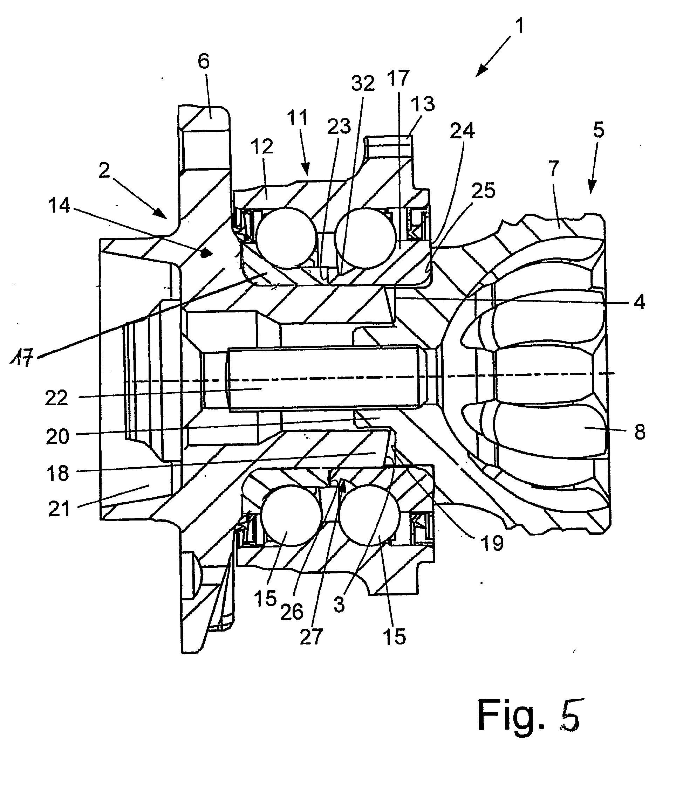

In Fig. 5 ist ein fünftes Ausführungsbeispiel der erfindungsgemäßen Lageranordnung 1 dargestellt, die weitgehend den in den Figuren 1 bis 4 dargestellten Ausführungsbeispielen entspricht, jedoch einen zweiten separaten Lagerinnenring 17 aufweist.

Bei allen fünf Ausführungsbeispielen ist die Stirnverzahnung 3, 4 von Radnabe 2 und Drehgelenk 5 jeweils als Hirth-Verzahnung mit radial verlaufenden Zähnen ausgeführt, wobei die Anzahl der Zähne zwischen 40 und 60 beträgt.

### Bezugszeichenliste

- 1: Lageranordnung
- 2: Radnabe
- 3: Stirnverzahnung
- 4: Stirnverzahnung
- 5: Drehgelenk
- 6: Radflansch
- 7: Äußerer Gelenkkörper
- 8: Laufbahn im äußeren Gelenkkörper
- 9: .
- 10: .
- 11: Wälzlager
- 12: Außenring
- 13: Befestigungsflansch
- 14: Innenring
- 15: Lagerkugel
- 16: Lagerinnenring
- 17: Lagerinnenring
- 18: Achsstumpf
- 19: Stirnfläche
- 20: Ansatz
- 21: Bohrung
- 22: Bolzen
- 23: Stirnfläche
- 24: Stirnfläche
- 25: Gegenfläche
- 26: Anlagefläche
- 27: Mittel
- 28: Ringnut
- 29: Federelement
- 30: Wellenscheibe
- 31: Freistich
- 32: Querschnittsverjüngung

## Patentansprüche

1. Lageranordnung (1) einer über ein Drehgelenk (5) antreibbaren Radnabe (2) eines Kraftfahrzeuges, bei der die mit einem Radflansch (6) verbundene Radnabe (2) und das mit einer Antriebswelle verbundene Drehgelenk (5) mittels einer Verzahnung (3, 4) drehfest miteinander verbunden sind, und mit einem auf der Radnabe (2) aufgezogenen zweireihigen Wälzlager (11) mit zumindest einem separaten Lagerinnenring (17), der mit einer Stirnfläche (24) axial über das Ende eines Achsstumpfes (18) der Radnabe (2) hinausragt, wobei das Wälzlager (11) über eine auf die Stirnfläche (24) des separaten Lagerinnenringes (17) einwirkende Gegenfläche (25) eines Gelenkkörpers (7) des Drehgelenks (5) axial vorgespannt ist, wobei eine Stirnfläche des Achsstumpfes (18) der Radnabe (2) eine Stirnverzahnung (3) aufweist, welche mit einer korrespondierenden Stirnverzahnung (4) des Gelenkkörpers (7) des Drehgelenks (5) drehfest verbindbar ist, wobei die Stirnverzahnungen (3, 4) zumindest teilweise radial und axial unterhalb des Wälzlagers (11) angeordnet sind, **dadurch gekennzeichnet dass** der Lagerinnenring (17) mit einem Mittel (27) zum axialen Toleranzausgleich zwischen dem Lagerinnenring (17) und der Gegenfläche (25) des Gelenkkörpers (7) in Verbindung steht.

2. Lageranordnung nach Anspruch 1, **dadurch gekennzeichnet, dass** das Mittel (27) zum axialen Toleranzausgleich zwischen dem Lagerinnenring (17) und der Gegenfläche (25) des Gelenkkörpers (7) ein axialer Freistich in Form einer Ringnut (28) in der Stirnfläche (19) des Gelenkkörpers (7) ist.

3. Lageranordnung nach Anspruch 1 oder 2, **dadurch gekennzeichnet, dass** das Mittel (27) zum axialen Toleranzausgleich ein Federelement (29) ist, welches zwischen der Gegenfläche (25) des Gelenkkörpers (7) und der Stirnfläche (24) des Lagerinnenrings (17) angeordnet ist.

4. Lageranordnung nach Anspruch 3, **dadurch gekennzeichnet, dass** das Federelement (29) eine Wellenscheibe (30), eine Omega-Buchse oder eine Tellerfeder ist.

5. Lageranordnung nach Anspruch 1 oder 2, **dadurch gekennzeichnet, dass** das Mittel (27) zum axialen Toleranzausgleich durch einen Freistich (31) gebildet ist, welcher derart in den Achsstumpf (18) eingeformt ist, dass zwischen einem axial äußeren Lagerinnenring (16) und einer axial äußeren Stirnfläche (23) des axial inneren Lagerinnenringes (17) ein axialer Abstand verbleibt.

6. Lageranordnung nach Anspruch 5, **dadurch gekennzeichnet, dass** das Mittel (27) zum axialen Toleranzausgleich durch eine Querschnittsverjüngung (32) des axial inneren Lagerinnenringes (17) im Bereich seiner axial äußeren Stirnfläche (23) gebildet ist.

7. Lageranordnung nach zumindest einem der Ansprüche 1 bis 6, **dadurch gekennzeichnet, dass** die Stirnverzahnung (3, 4) eine Hirth-Verzahnung mit radial verlaufenden Zähnen mit einer Anzahl von 20 bis 80, insbesondere 25 bis 50, ist.

## Claims

1. Bearing arrangement (1) of a wheel hub (2) of a motor vehicle drivable by a rotating joint (5), wherein the wheel hub (2), which is connected to a wheel flange (6), and the rotating joint (5), which is connected to a drive shaft, are non-rotatably connected to each other by means of a serration (3, 4), and comprising a double-row roller bearing (11) which is mounted on the wheel hub (2) and has at least one separate bearing inner ring (17), an end face (24) of which protrudes axially beyond the end of an axle stub (18) of the wheel hub (2), wherein the roller bearing (11) is axially prestressed via a counter-surface (25) of a joint body (7) of the rotating joint (5), the surface acting on the end face (24) of the separate bearing inner ring (17), wherein an end face of the axle stub (18) of the wheel hub (2) comprises an end serration (3) which can be non-rotatably connected to a corresponding end serration (4) of the joint body (7) of the rotating joint (5), wherein the end serrations (3, 4) are disposed at least partially radially and axially beneath the roller bearing (11), **characterized in that** the bearing inner ring (17) is connected to a means (27) for axial tolerance compensation between the bearing inner ring (17) and the counter-surface (25) of the joint body (7).

2. Bearing arrangement according to Claim 1, **characterized in that** the means (27) for axial tolerance compensation between the bearing inner ring (17) and the counter-surface (25) of the joint body (7) is an axial undercut in the form of an annular groove (28) in the end face (19) of the joint body (7).

3. Bearing arrangement according to Claim 1 or 2, **characterized in that** the means (27) for axial tolerance compensation is a spring element (29) which is disposed between the counter-surface (25) of the joint body (7) and the end face (24) of the bearing inner ring (17).

4. Bearing arrangement according to Claim 3, **characterized in that** the spring element (29) is a shaft washer (30), an omega bush or a plate spring.

5. Bearing arrangement according to Claims 1 or 2, **characterized in that** the means (27) for axial tolerance compensation is formed by an undercut (31) which is formed into the axle stub (18) in such a way that an axial spacing remains between an axially outer bearing inner ring (16) and an axially outer end face (23) of the axially inner bearing inner ring (17).

6. Bearing arrangement according to Claim 5, **characterized in that** the means (27) for axial tolerance compensation is formed by a cross-sectional tapering (32) of the axially inner bearing inner ring (17) in the region of its axially outer end face (23).

7. Bearing arrangement according to at least one of Claims 1 to 6, **characterized in that** the end serration (3, 4) is a Hirth serration with radially extending teeth having a number of from 20 to 80, in particular 25 to 50.

## Revendications

1. Agencement de palier (1) d'un moyeu de roue (2) d'un véhicule automobile pouvant être entraîné par le biais d'une articulation pivotante (5), dans lequel le moyeu de roue (2) connecté à un flasque de roue (6) et l'articulation pivotante (5) connectée à un arbre d'entraînement sont connectées l'un à l'autre de manière solidaire en rotation au moyen d'une denture (3, 4), et comprenant un palier à roulement (11) à deux rangées enfilé sur le moyeu de roue (2), avec au moins une bague de palier interne (17) séparée, qui fait saillie avec une face frontale (24) axialement au-delà de l'extrémité d'un bout d'essieu (18) du moyeu de roue (2), le palier à roulement (11) étant précontraint axialement par le biais d'une surface conjuguée (25) d'un corps d'articulation (7) de l'articulation pivotante (5) agissant sur la face frontale (24) de la bague de palier interne (17) séparée, une face frontale du bout d'essieu (18) du moyeu de roue (2) présentant une denture frontale (3), qui peut être connectée de manière solidaire en rotation à une denture frontale correspondante (4) du corps d'articulation (7) de l'articulation pivotante (5), les dentures frontales (3, 4) étant disposées au moins en partie radialement et axialement sous le palier à roulement (11), **caractérisé en ce que** la bague de palier interne (17) est en liaison avec un moyen (27) pour la compensation des tolérances axiales entre la bague de palier interne (17) et la surface conjuguée (25) du corps d'articulation (7).

2. Agencement de palier selon la revendication 1, **caractérisé en ce que** le moyen (27) pour la compensation des tolérances axiales entre la bague de palier interne (17) et la surface conjuguée (25) du corps d'articulation (7) est un dégagement par rainure axial en forme de rainure annulaire (28) dans la face frontale (19) du corps d'articulation (7).

3. Agencement de palier selon la revendication 1 ou 2, **caractérisé en ce que** le moyen (27) pour la compensation des tolérances axiales est un élément de ressort (29) qui est disposé entre la surface conjuguée (25) du corps d'articulation (7) et la face frontale (24) de la bague de palier interne (17).

4. Agencement de palier selon la revendication 3, **caractérisé en ce que** l'élément de ressort (29) est un disque ondulé (30), une douille Omega, ou une rondelle Belleville.

5. Agencement de palier selon la revendication 1 ou 2, **caractérisé en ce que** le moyen (27) pour la compensation des tolérances axiales est formé par un dégagement par rainure (31), qui est façonné dans le bout d'essieu (18) de telle sorte qu'entre une bague de palier interne axialement extérieure (16) et une face frontale axialement extérieure (23) de la bague de palier interne (17) axialement intérieure subsiste un espacement axial.

6. Agencement de palier selon la revendication 5, **caractérisé en ce que** le moyen (27) pour la compensation des tolérances axiales est formé par un rétrécissement de section transversale (32) de la bague de palier interne (17) axialement intérieure dans la région de sa face frontale axialement extérieure (23).

7. Agencement de palier selon au moins l'une quelconque des revendications 1 à 6, **caractérisé en ce que** la denture frontale (3, 4) est une denture de Hirth avec des dents s'étendant radialement en un nombre de 20 à 80, en particulier de 25 à 50.
